# EUROPEAN PATENT APPLICATION

(11) **EP 2 058 216 A1**
(43) Date of publication of application: **13.05.2009**
(21) Application number: 07792962.8
(22) Date of filing: 24.08.2007
(51) Int. Cl.: B62K 17/00, B62K 3/00, B60L 15/00

(54) **TRAVELING VEHICLE**

(30) Priority: 29.08.2006 JP 2006232402
(71) Applicant: Equos Research Co., Ltd., Tokyo 101-0021 (JP)
(72) Inventor: NAITO, Takashi, Tokyo 101-0021 (JP)
(74) Representative: TBK-Patent
(86) International application number: PCT/JP2007/066433
(87) International publication number: WO 2008/026511

(57) **Abstract**

TASK

To provide a traveling vehicle that can stably control traveling and braking of the vehicle even when a balancer that controls the balance of the vehicle is out of order.

MEANS OF SOLVING THE PROBLEM

A traveling vehicle 1 that includes a vehicle body 2, a wheel 8 rotatably supported by the vehicle body 2, and driving means 7 driving the wheel 8 further includes: vehicle body posture detecting means 21 that detects the posture of the vehicle body 2; a balancer 10 for controlling the posture of the vehicle body 2 by moving a weight 14; and vehicle body posture controlling means 22 that controls the balancer 10 based on the vehicle body posture detected by the vehicle body posture detecting means 21. The vehicle body posture controlling means 22 controls, when the balancer 10 is out of order, the posture of the vehicle body 2 by the driving means 7 alone.

## Description

### TECHNICAL FIELD

The present invention relates to a traveling vehicle that stably controls posture thereof by using a balancer.

### BACKGROUND ART

In related art, a conveying apparatus that maintains a balanced state favorably by applying a counter weight as postural control has been known (see Patent Document 1).

Also known is mobile equipment for a person provided with a traveling control part for performing both traveling control and postural control to maintain a balanced state in a longitudinal direction by controlling and driving right and left driving wheels in response to an output of a posture detecting sensor. Such equipment makes the inclination of a vehicle body smaller during braking by moving a weight to change the center of gravity position.
[Patent Document 1] Japanese Patent Application Publication No. JP-A-2004-129435
[Patent Document 2] Japanese Patent Application Publication No. JP-A-2004-276727

### DISCLOSURE OF THE INVENTION

### Problem to be Solved by the Invention

However, in the inventions described in Patent Documents 1 and 2, in a case where the balancer that controls the balance of the vehicle is out of order, the position of the balancer cannot be controlled appropriately, and the center of gravity of the vehicle moves. Consequently, traveling and braking of the vehicle by using the balancer cannot be controlled stably.

In order to solve the problems described above, it is an object of the present invention to provide a traveling vehicle that stably controls traveling and braking of the vehicle even when a balancer that controls the posture of the vehicle is out of order.

### Means for Solving the Problem

According to the present invention, a traveling vehicle that includes a vehicle body, a wheel rotatably supported by a vehicle body, and driving means driving the wheel is characterized in that the traveling vehicle further includes: vehicle body posture detecting means that detects the posture of the vehicle body; a balancer for controlling the posture of the vehicle body by moving a weight; and vehicle body posture controlling means that controls the balancer based on a vehicle body posture detected by the vehicle body posture detecting means, and in that the vehicle body posture controlling means controls, when the balancer is out of order, the posture of the vehicle body by the driving means alone.

The traveling vehicle is characterized in that it may further include: weight position locking means that locks the position of the weight of the balancer when the balancer is out of order, and weight position detecting means that detects the position of the weight, in that the vehicle body posture controlling means may include: center of gravity calculating means that calculates a new center of gravity position of the traveling vehicle from the position of the weight detected by the weight position detecting means, and in that the driving means is controlled based on the calculation result of the center of gravity calculating means.

The traveling vehicle is characterized in that it may further include: weight movement determining means that determines whether the weight is movable or not when the balancer is out of order. When the weight movement determining means determines that the weight is movable, the weight is moved to a predetermined position, and is locked by the weight locking means.

### Effects of the Invention

Accordingly, a traveling vehicle that includes a vehicle body, a wheel rotatably supported by the vehicle body, and driving means driving the wheel, further includes: vehicle body posture detecting means that detects the posture of the vehicle body; a balancer for controlling the posture of the vehicle body by moving a weight; and vehicle body posture controlling means that controls the balancer based on a vehicle body posture detected by the vehicle body posture detecting means. The vehicle body posture controlling means controls, when the balancer is out of order, the posture of the vehicle body by the driving means alone. Consequently, the traveling vehicle can be operated even when the balancer is out or order, and the traveling vehicle can at least be moved to road shoulders or repair yards.

Also, the traveling vehicle further includes: weight position locking means that locks the position of the weight of the balancer when the balancer is out of order, and weight position detecting means that detects the position of the weight. The vehicle body posture controlling means includes: center of gravity calculating means that calculates a new center of gravity position of the traveling vehicle from the position of the weight detected by the weight position detecting means. Since the driving means is controlled based on the calculation result of the center of gravity calculating means, more delicate control can be performed.

The traveling vehicle further includes: weight movement determining means that determines whether the weight is movable or not when the balancer is out of order. When the weight movement determining means determination that the weight is movable, the weight is moved to a predetermined position, and is locked by the weight locking means. Consequently, a new center of gravity position of the traveling vehicle does not need to be calculated, whereby the control can be simplified.

### BEST MODES FOR CARRYING OUT THE INVENTION

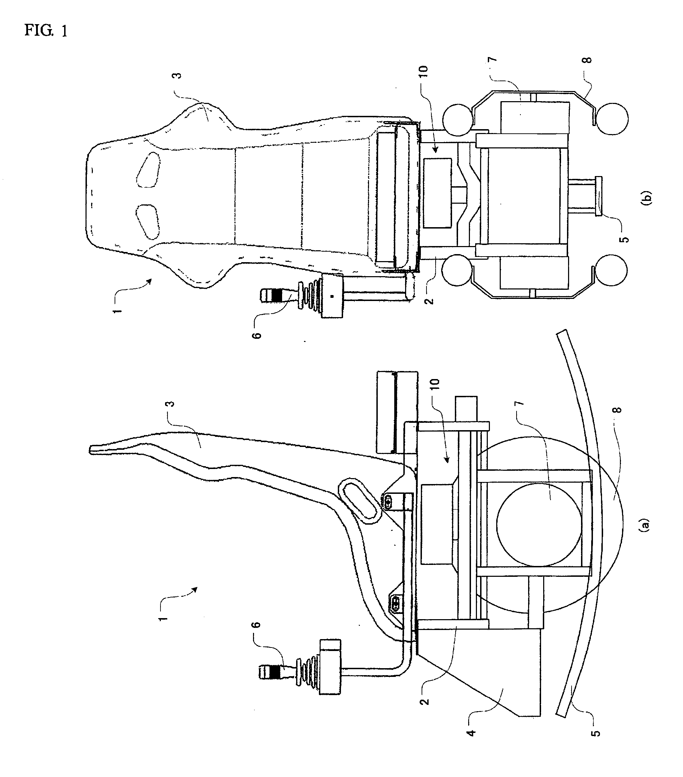

Hereinafter, an embodiment as an example of the present invention will be explained with reference to the drawings. FIG. 1 shows a traveling vehicle of the present embodiment. In the figure, the reference numeral 1 denotes a traveling vehicle, the reference numeral 2 denotes a vehicle body, the reference numeral 3 denotes a seat as an example of an occupant mounting part, the reference numeral 4 denotes a footrest, the reference numeral 5 denotes an overturning prevention bar, the reference numeral 6 denotes a joystick, the reference numeral 7 denotes a wheel motor as an example of driving means, the reference numeral 8 denotes a wheel, and the reference numeral 10 denotes a balancer.

The traveling vehicle 1 includes the vehicle body 2, the seat 3, the footrest 4, the overturning prevention bar 5, the joystick 6, right and left wheel motors 7, the wheel 8, and the balancer 10. The vehicle body 2 is provided with, at an upper section, the seat 3 on which the occupants M sits, and is provided with, at a substantially central section, the balancer 10. Also, the vehicle body 2 has, at a front section, the footrest 4 on which the legs of the occupant M are mounted, and has, at a lower section, the overturning prevention bar 5 that extends longitudinally. The seat 3 is supported by the vehicle body, and includes a seat 3a on which the occupant M is mounted, and a seat back 3b that serves as a back rest of the occupant M. The height of the seat back 3b is preferably larger than the height of the head of the occupant M. The joystick 6 is operated by the occupant M who sits on the seat 3, and is supported by the vehicle body 2. The right and left wheel motors 7 are supported by the vehicle body 2 on a common shaft. The wheel motors 7 can independently control the longitudinal driving force, and each of the wheel motors 7 is linked with the wheel 8 that is rotatably supported by the vehicle body 2. The balancer 10 is mounted on the vehicle body 2, and controls the posture of the traveling vehicle 1.

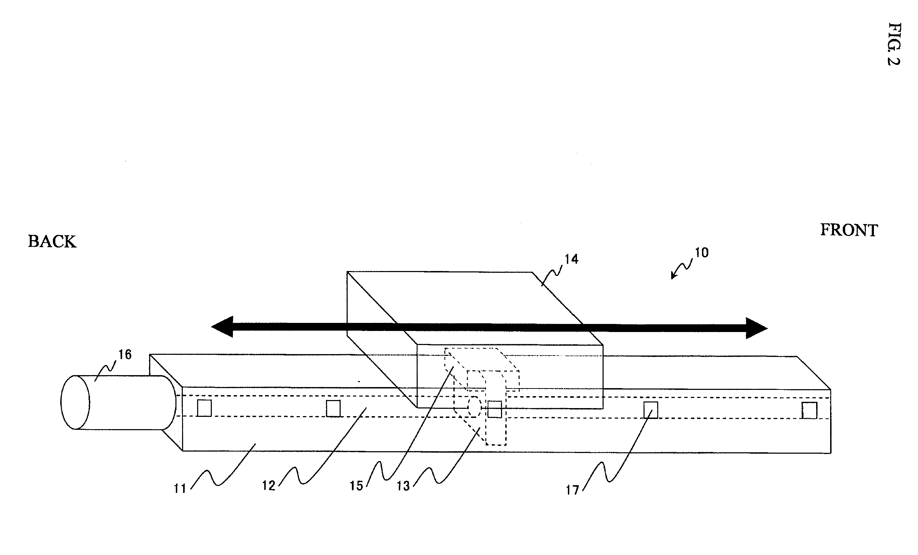

FIG. 2 is a diagram of the balancer 10 of the present embodiment. The balancer 10 has a ball screw 12 provided on a rail 11, and moves a slider 15 retained by the ball screw 12 by a nut block 13 and mounted with a weight 14, along the rail 11 by a balancer actuator 16 such as servomotors. The position of the weight 14 is detected by a balancer position sensor 17. As for the weight 14, batteries, ECUs and the like are preferably used.

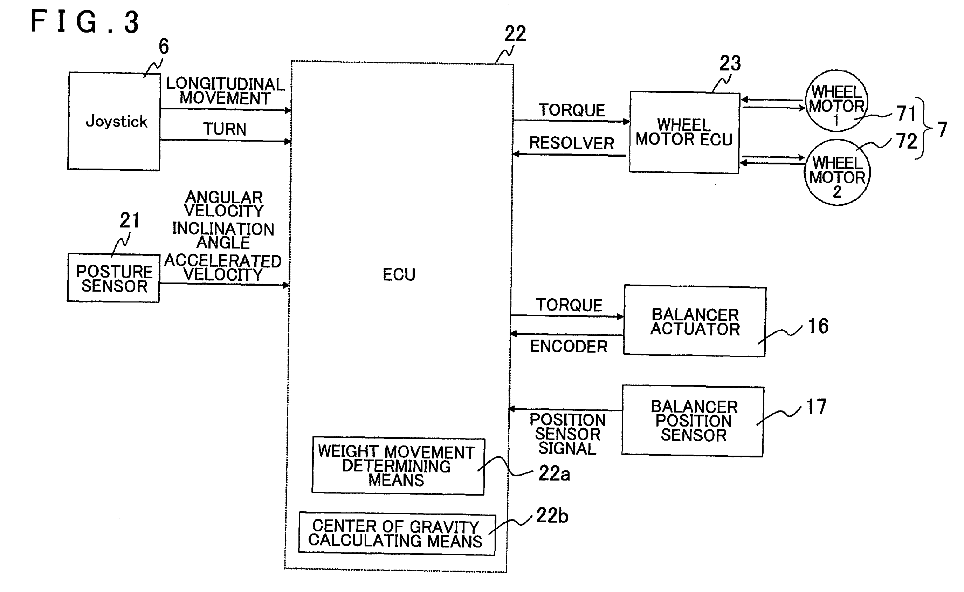

FIG. 3 is a block diagram of the present embodiment. In the figure, the reference numeral 6 denotes the joystick, the reference numeral 7 denotes the wheel motor as an example of driving means, the reference numeral 71 denotes a first wheel motor, the reference numeral 72 denotes a second wheel motor, the reference numeral 21 denotes a posture sensor as an example of vehicle body posture detecting means, the reference numeral 22 denotes an ECU as an example of vehicle body posture controlling means, the reference numeral 22a denotes weight movement determining means, the reference numeral 22b denotes center of gravity calculating means, the reference numeral 23 denotes a wheel motor ECU as an example of vehicle body posture controlling means, the reference numeral 16 denotes the balancer actuator as an example of weight position locking means, and the reference numeral 17 denotes the balancer position sensor as an example of weight position detecting means.

The joystick 6 is for operating longitudinal movement and turning and the like of the traveling vehicle 1, and outputs such operation amounts and the like to the ECU 22. The posture sensor 21 detects the posture of the vehicle body 2 such as an angular velocity, an inclination angle, and an accelerated velocity, and outputs signals to the ECU 22. The ECU 22 outputs a signal for controlling the vehicle body posture based on detection values of the posture sensor 21 to each actuator.

At the normal state, the traveling vehicle 1 receives an input such as an operation value of longitudinal movement and turning by the joystick 6 of the occupant M, a posture detection value such as an angular velocity, an inclination angle, and an accelerated velocity by the posture sensor 21, a resolver from the wheel motor 7, and a counter encoder from the balancer actuator 16. The traveling vehicle 1 travels while maintaining the posture by controlling the first wheel motor 71 and the second wheel motor 72 by the ECU 22 and the wheel motor ECU 23, and by controlling the balancer actuator 16 by the ECU 22.

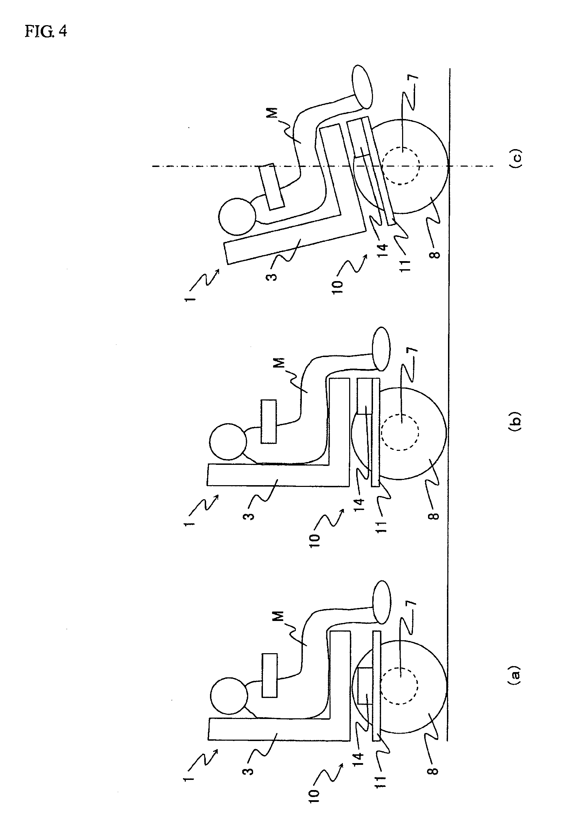

FIG. 4 is a schematic view of control during malfunction of the present embodiment when the balancer 10 is out of order due to its malfunction. As shown in FIG. 4A, normally, postural control of the traveling vehicle 1 is performed by, for example, moving the weight 14 of the balancer 10, thereby enabling the traveling vehicle 1 to travel without overturning. As shown in FIG. 4B, in a case where the balancer 10 is out of order due to its malfunction, the weight movement determining means 22a determines whether the weight 14 is movable or not, and thereafter, the weight 14 is locked at the current position or at a predetermined position by the balancer actuator 16. The locked position of the weight 14 of the balancer 10 is detected by the balancer position sensor 17, and the posture is controlled by the driving torque of the wheel motor 7 based on the center of gravity position of the vehicle calculated by the center of gravity calculating means 22b, whereby the traveling vehicle 1 travels as shown in FIG. 4C.

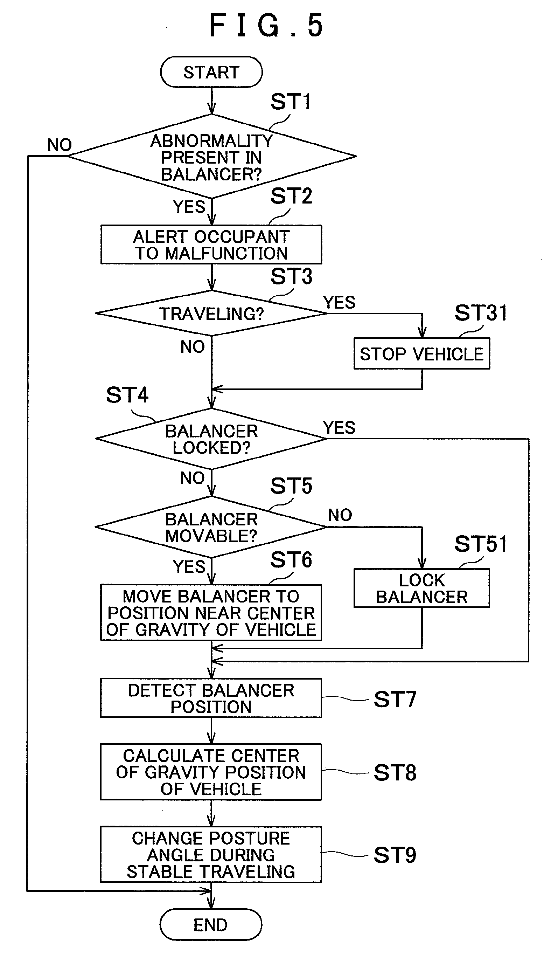

Next, a flowchart of control during malfunction of the balancer 10 of such traveling vehicle 1 is explained. FIG. 5 is a view showing a flowchart of control during malfunction of the balancer 10 of the present embodiment.

In the traveling vehicle 1 of the present embodiment, first, in step 1, a determination is made whether an abnormality is present in the balancer 10 or not (ST1). Abnormalities of the balancer 10 include the following cases. A case where, although a command is issued to the balancer actuator 16, a value of an encoder of the balancer actuator 16 does not change, and the balancer 10 is not operated. On the contrary, a case where, although no command is issued to the balancer actuator 16, a value of an encoder of the balancer actuator 16 changes, and the balancer 10 is operated. Further, a case where a count of a value of an encoder and a detection value of the rail sensor 17 do not match.

If a determination is made that an abnormality is present in the balancer 10, in ST2, the occupant is alerted about the malfunctioning of the balancer 10 (ST2). If a determination is made that no abnormality is present in the balancer 10, control during malfunction of the balancer 10 is not performed.

Next, in step 3, a determination is made whether the traveling vehicle 1 is traveling or not (ST3). If a determination is made that the traveling vehicle 1 is traveling, the traveling vehicle 1 is stopped in step 31, and the process proceeds to step 4. If a determination is made that the traveling vehicle 1 is not traveling, the process proceeds directly to step 4.

In step 4, a determination is made whether the weight 14 of the balancer 10 is locked so as not to move or not (ST4). If locked, the process proceeds to step 7. If not locked, in step 5, the weight movement determining means 22a determines whether the weight 14 of the balancer 10 is movable or not (ST5). If not movable, in step 51, the weight 14 is locked at the current position (ST51), and the process proceeds to step 7. If movable, in step 6, the weight 14 is moved to a predetermined position (ST6).

Next, in step 7, the position of the weight 14 is detected from an encoder of the balancer actuator 16 and a detection value of the rail sensor 17 (ST7). Next, in step 8, the center of gravity calculating means 22b calculates the center of gravity position of the traveling vehicle 1 from the position of the weight 14 obtained in step 7 (ST8). At last, in step 9, from the center of gravity position of the traveling vehicle 1 obtained in step 8, postural control of the traveling vehicle 1 is performed (ST9). For example, if the center of gravity position is at the front, the traveling vehicle 1 can be balanced by controlling the driving torque of the wheel motor 7 to slightly incline the traveling vehicle 1 backward. If the center of gravity position is at the back, the traveling vehicle 1 can be balanced by controlling the driving torque of the wheel motor 7 to slightly incline the traveling vehicle 1 frontward.

As described above, in a case where the balancer 10 of the traveling vehicle 1 is out of order due to its malfunction, as well as by cutting off postural control of the traveling vehicle 1 by the balancer 10, by locking the position of the weight 14 of the balancer 10 and performing postural control of the traveling vehicle 1 by the wheel motor 7, the traveling vehicle 1 can be operated, and can be moved to road shoulders, repair yards and such.

### BRIEF DESCRIPTION OF THE DRAWINGS

[FIG. 1] FIG. 1 is a diagram of a traveling vehicle according to an embodiment of the present invention.
[FIG. 2] FIG. 2 is a diagram of a balancer according to the embodiment.
[FIG. 3] FIG. 3 is a block diagram of the embodiment.
[FIG. 4] FIG. 4 is a schematic diagram of control during malfunction of the balancer.
[FIG. 5] FIG. 5 is a diagram of a flowchart of control during malfunction of the balancer.

### Description of the Reference Numerals

- 1: traveling vehicle
- 2: vehicle body
- 3: seat (occupant mounting portion)
- 4: footrest
- 5: overturning prevention bar
- 6: joystick
- 7: wheel motor (driving means)
- 71: first wheel motor
- 72: second wheel motor
- 8: wheel
- 10: balancer
- 11: rail
- 12: ball screw
- 13: nut block
- 14: weight
- 15: slider
- 16: balancer actuator (weight position moving/locking means)
- 17: balancer position sensor (weight position detecting means)
- 21: posture sensor (vehicle body posture detecting means)
- 22: ECU (vehicle body posture controlling means)
- 22a: weight movement determining means
- 22b: center of gravity calculating means
- 23: wheel motor ECU (vehicle body posture controlling means)

## Claims

1. A traveling vehicle that includes:
a vehicle body;
a wheel rotatably supported by the vehicle body; and
driving means driving the wheel, the traveling vehicle **characterized by** comprising:
vehicle body posture detecting means that detects the posture of the vehicle body; a balancer for controlling the posture of the vehicle body by moving a weight; and
vehicle body posture controlling means that controls the balancer based on the posture of the vehicle body detected by the vehicle body posture detecting means,
wherein
the vehicle body posture controlling means controls, when the balancer is out of order, the posture of the vehicle body by the driving means alone.

2. The traveling vehicle according to claim 1, **characterized by** further comprising:
weight position locking means that locks the position of the weight of the balancer when the balancer is out of order; and
weight position detecting means that detects the position of the weight; wherein:
the vehicle body posture controlling means comprises
center of gravity calculating means that calculates a new center of gravity position of the traveling vehicle from the position of the weight detected by the weight position detecting means, and
the driving means is controlled based on the calculation result of the center of gravity calculating means.

3. The traveling vehicle according to claim 2, **characterized by** further comprising:
weight movement determining means that determines whether the weight is movable or not when the balancer is out of order, and **characterized in that**
when the weight movement determining means determines that the weight is movable, the weight is moved to a predetermined position, and is locked by the weight locking means.
